# EUROPEAN PATENT APPLICATION

(11) **EP 4 527 573 A1**
(43) Date of publication of application: **26.03.2025**
(21) Application number: 23905285.5
(22) Date of filing: 21.08.2023
(51) Int. Cl.: B25J 19/00

(54) **ROBOT**

(30) Priority: 20.12.2022 CN 202223453041 U
(71) Applicant: Shenzhen Pudu Technology Co., Ltd., Shenzhen, Guangdong 518000 (CN)
(72) Inventor: LV, Qing, Shenzhen, Guangdong 518000 (CN); CHEN, Jiaji, Shenzhen, Guangdong 518000 (CN)
(74) Representative: Corradini, Corrado
(86) International application number: PCT/CN2023/113972
(87) International publication number: WO 2024/131106

(57) **Abstract**

A robot (10), comprising a body (100), a handrail (200) on which an assembly member (210) is disposed, locking mechanisms (400), and unlocking mechanisms (500). The assembly member (210) is provided with first limiting grooves (211) and a connecting pin (300). The locking mechanisms (400) comprise locking members (410) and locking bolts (420) connected to the body (100) and hinged with the assembly member (210). The locking members (410) are provided with second limiting grooves (411). The locking bolts (420) can move along an axial direction of the second limiting grooves (411) and move into the first limiting grooves (211) and the second limiting grooves (411). The unlocking mechanisms (500) are used to drive the connecting pin (300) to move along an axial direction of the first limiting grooves (211) so as to drive the locking bolts (420) to detach from the first limiting grooves (211).

## Description

This application claims priority to Chinese patent application No. CN202223453041.5, entitled "ROBOT" filed with China National Intellectual Property Administration on December 20, 2022, the content of which is hereby incorporated by reference in its entirety.

### TECHNICAL FIELD

The present disclosure relates to the technical field of intelligent cleaning apparatus, particularly to a robot.

### BACKGROUND

Robots can improve environmental sanitation and help people save time and energy. Conventional robots are manually controlled, and typically provided with a handrail on the top of the appearance surface of robots to assist users in moving the robot body to complete various tasks. However, the handrails of conventional robots are usually fixed on the robot body, and the existing handrail structures usually take up a relatively large space.

### SUMMARY

According to various embodiments of the present disclosure, a robot is provided.

A robot includes:
a body;
a handrail, an end of the handrail being provided with an assembly member, wherein the assembly member is provided with a first limiting groove and a connecting pin extending through the first limiting groove and being movable in an axial direction of the first limiting groove;
a locking mechanism including a locking member and a locking pin that are fixedly connected to the body, wherein the locking member is hinged to the assembly member, such that a handrail is capable of rotating relative to the body, and the locking member is provided with a second limiting groove configured to receive the locking pin, when the handrail rotates to a preset angle relative to the body, the locking pin is capable of moving in an axial direction of the second limiting groove and moving into the first limiting groove and the second limiting groove, so as to lock the handrail in a first state;
an unlocking mechanism located at one end of the connecting pin, wherein the locking pin is located at the other end of the connecting pin, the unlocking mechanism is configured to drive the connecting pin to move in the axial direction of the first limiting groove, so as to drive the locking pin to be disengaged from the first limiting groove, thereby enabling the handrail to be switched from the first state to a second state.

Details of one or more embodiments of the present disclosure are presented in the following drawings and descriptions. Other features and advantages of the present disclosure will become apparent from the specification, drawings, and claims.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a schematic structural view of a robot according to an embodiment of the present disclosure.
FIG. 2 is a partial schematic structural view of a robot according to an embodiment of the present disclosure.
FIG. 3 is an exploded schematic structural view of a robot according to an embodiment of the present disclosure.
FIG. 4 is a partial exploded schematic structural view of a robot according to an embodiment of the present disclosure.
FIG. 5 is a schematic structural view of a robot in a second state according to an embodiment of the present disclosure.
FIG. 6 is an enlarged view of portion A in FIG. 5.
FIG. 7 is a schematic structural view of a robot in a first state according to an embodiment of the present disclosure.
FIG. 8 is an enlarged view of portion B in FIG. 7.
FIG. 9 is a schematic structural view of a locking member according to an embodiment of the present disclosure.
FIG.10 is a schematic structural view of an assembly member according to an embodiment of the present disclosure.
FIG. 11 is a schematic view of a connection structure of a locking pin and a locking-resetting elastic member according to an embodiment of the present disclosure.

Explanation of the reference numerals:
10: robot; 100: body; 200: handrail; 210: assembly member; 211: first limiting groove; 2111: first taper surface; 212: sliding hole; 300: connecting pin; 310: sliding portion; 320: abutting portion; 330: connecting portion; 400: locking mechanism; 410: locking member; 411: second limiting groove; 420: locking pin; 421: second taper surface; 430: locking-driving assembly; 431: locking-resetting elastic member; 432: locking end cap; 500: unlocking mechanism; 600: damping hovering assembly; 610: damper; 620: damping mounting plate; 700: unlocking elastic member; 800: display screen.

### DETAILED DESCRIPTION

For easy understanding of the present disclosure, a more comprehensive description of the present disclosure is given below with reference to the accompanying drawings. Preferred embodiments of the present disclosure are illustrated in the accompanying drawings. However, the present disclosure may be implemented in many different forms and is not limited to the embodiments described herein. Rather, these embodiments are provided to make the contents disclosed in the present disclosure more thoroughly and comprehensive.

Unless otherwise defined, all technical and scientific terms used herein have the same meaning as commonly understood by those of ordinary skill in the art to which the present disclosure pertains. The terms used in the specification of the present disclosure herein are for the purpose of describing specific embodiments only and are not intended to limit the present disclosure. The term "and/or" used herein includes any and all combinations of one or more of the associated listed items.

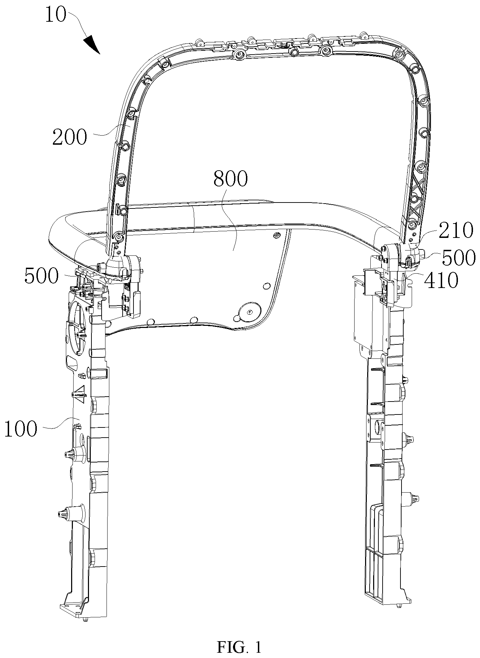

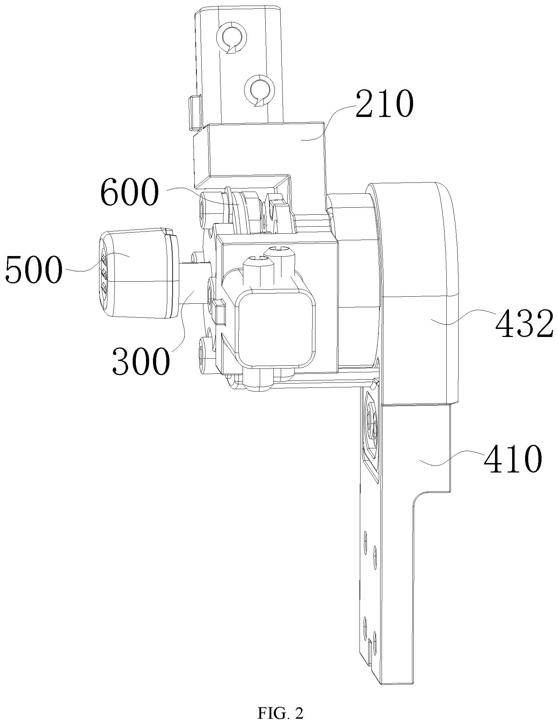

Referring to FIGs. 1, 2, and 4, an embodiment of the present disclosure provides a robot 10, including a body 100, a handrail 200, a locking mechanism 400, and an unlocking mechanism 500. The handrail 200 is hinged on the body 100, and the handrail 200 is rotatable relative to the body 100. The locking mechanism 400 is configured to lock the handrail 200 at a preset angle relative to the body 100. The unlocking mechanism 500 is configured to unlock the locked handrail 200.

Referring to FIGs. 1, 2, 3, and 4, an end of the handrail 200 is provided with an assembly member 210. The assembly member 210 is provided with a first limiting groove 211 and a connecting pin 300 extending through the first limiting groove 211 and being movable in an axial direction of the first limiting groove 211. Optionally, the handrail 200 and the assembly member 210 can be integrally formed. The assembly member 210 can also be fixedly connected to an end of the handrail 200.

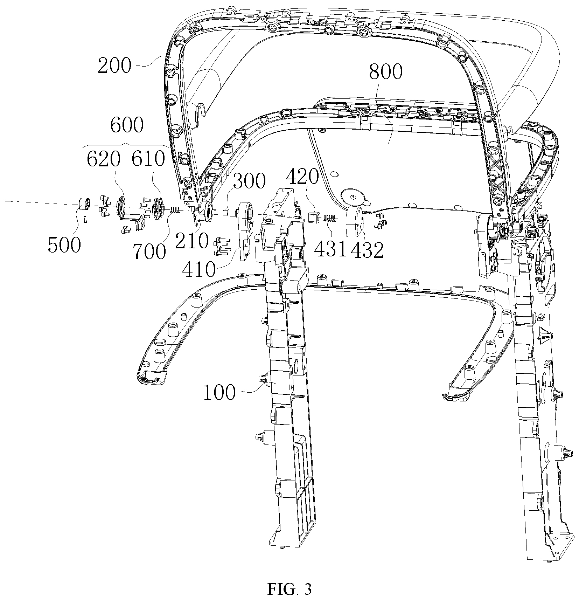

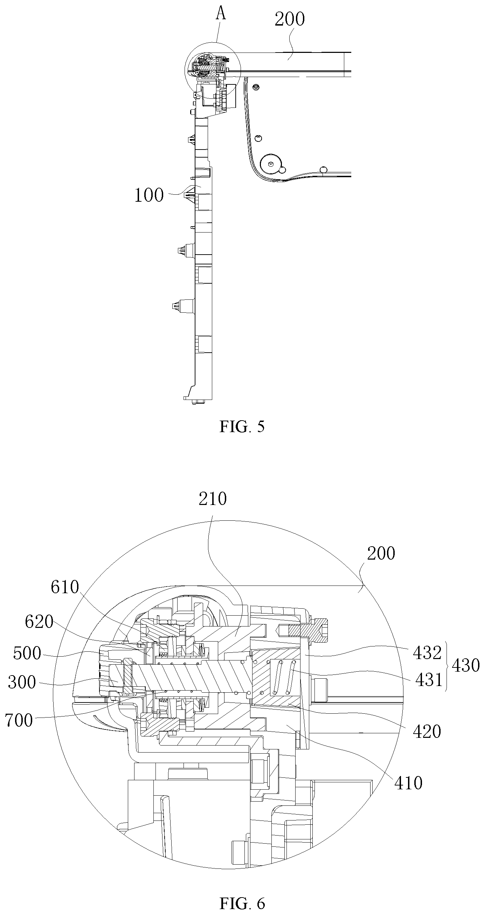

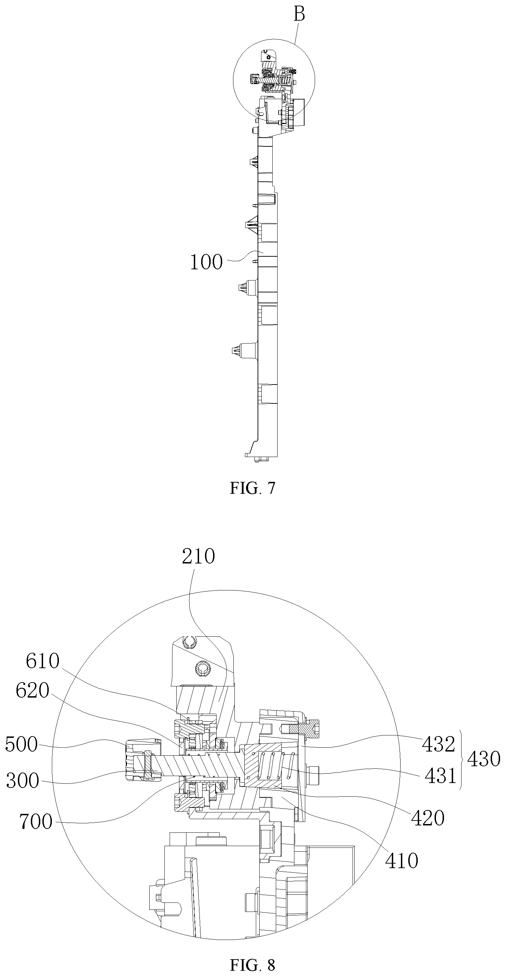

Referring to FIGs. 3, 4, 6, and 8, the locking mechanism 400 includes a locking member 410 and a locking pin 420 that are fixedly connected to the body 100. The locking member 410 is hinged to the assembly member 210, such that the handrail 200 is capable of rotating relative to the body 100, and the locking member 410 is provided with a second limiting groove 411 configured to receive the locking pin 420. Specifically, the central axis of the first limiting groove 211 on the assembly member 210 and the central axis of the second limiting groove 411 coincide with each other, and the notch of the first limiting groove 211 is opposite to the notch of the second limiting groove 411.

Optionally, the assembly member 210 is hinged to the locking member 410 by being hinged on the locking pin 420.

In another optional embodiment, the locking member 410 is hinged to the assembly member 210 by a hinge assembly. The hinge assembly includes an annular engaging block provided on the assembly member 210 and an annular engaging groove provided on the locking member 410 and mated with the annular engaging block. The central axis of the annular engaging block and the central axis of the annular engaging groove coincide with each other. More specifically, the central axis of the annular engaging block and the central axis of the first limiting groove 211 coincide with each other. The central axis of the annular engaging groove and the central axis of the second limiting groove coincide with each other.

Referring to FIGs. 1, 4, 7, and 8, when the handrail 200 rotates to a preset angle relative to the body 100, the locking pin 420 can move in the axial direction of the second limiting groove 411 and move into the first limiting groove 211 and the second limiting groove 411, so as to lock the handrail 200 in a first state. When the locking pin 420 is in the first limiting groove 211 and the second limiting groove 411, the handrail 200 can be locked, so that the handrail 200 cannot rotate relative to the body 100, thereby maintaining the handrail 200 stable. That is, the first state refers to a state in which the handrail 200 cannot rotate relative to the body 100.

Referring to FIGs. 1, 4, 5, and 6, the unlocking mechanism 500 located at one end of the connecting pin 300, and the locking pin 420 is located at the other end of the connecting pin 300. The unlocking mechanism 500 is configured to drive the connecting pin 300 to move in the axial direction of the first limiting groove 211, so as to drive the locking pin 420 to be disengaged from the first limiting groove 211, thereby enabling the handrail 200 to be switched from the first state to a second state. When the locking pin 420 is disengaged from the first limiting groove 211, the rotating of the handrail 200 is not affected by the locking pin 420, thereby unlocking the locked handrail 200, and the handrail 200 can rotate to any angle relative to the body 100. That is, the first state refers to a state in which the handrail 200 can arbitrarily rotate relative to the body 100.

In an optional embodiment, the connecting pin 300 can be provided separately from the locking pin 420. They may always abut against each other, or may be spaced apart from each other. When the locked handrail 200 is unlocked, the connecting pin 300 abuts against the locking pin 420.

In another optional embodiment, the connecting pin 300 and the locking pin 420 may be fixedly connected to each other, for example, they may be integrally formed or fixed by welding, threading, etc., which is not limited herein.

By providing the locking mechanism 400 and the assembly member 210, when the handrail 200 rotates to a preset angle relative to the body 100, the locking pin 420 can be movably provided in the first limiting groove 211 and the second limiting groove 411 in the axial direction of the second limiting groove 411 to lock the handrail 200, thereby maintaining the handrail 200 stable. By providing the unlocking mechanism 500 and the connecting pin 300, the unlocking mechanism 500 can drive the connecting pin 300 to move in the axial direction of the first limiting groove 211, so as to drive the locking pin 420 to be disengaged from the first limiting groove 211, thereby unlocking the locked handrail 200, and allowing the handrail 200 to rotate to any angle relative to the body 100.

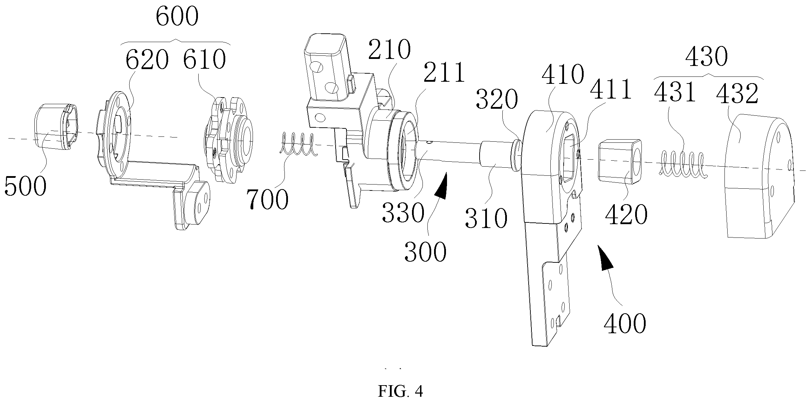

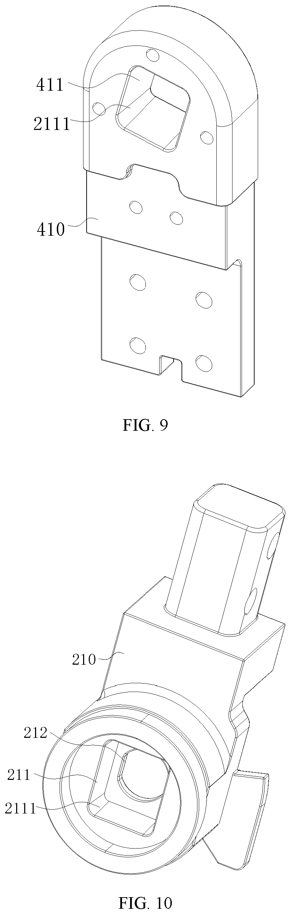

Referring to FIGs. 4, 6, 9 and 10, according to some embodiments of the present disclosure, optionally, in the first state, an orthographic projection of a first notch of the first limiting groove 211 toward the second limiting groove 411 on a projection plane is within an orthographic projection of a second notch of the second limiting groove 411 toward the first limiting groove 211 on the projection plane. In the second state, the orthographic projection the first notch of the first limiting groove 211 toward the second limiting groove 411 on the projection plane is partially misaligned with the orthographic projection of the second notch of the second limiting groove 411 toward the first limiting groove 211 on the projection plane. The projection plane is a horizontal plane perpendicular to the axial direction of the first limiting groove 211.

It should be understood that, when the orthographic projection of the first notch of the first limiting groove 211 toward the second limiting groove 411 on the projection plane is within the orthographic projection of the second notch of the second limiting groove 411 toward the first limiting groove 211 on the projection plane, the locking pin 420 can move in an axial direction of the second limiting groove 411 and move into the first limiting groove 211 and the second limiting groove 411. When the orthographic projection of the first notch of the first limiting groove 211 toward the second limiting groove 411 on the projection plane is partially misaligned with the orthographic projection of the second notch of the second limiting groove 411 toward the first limiting groove 211 on the projection plane, the end of the locking pin 420 adj acent to the first limiting groove 211 abuts against the end of the first limiting groove 211 adjacent to the locking pin 420, so that the end of the first limiting groove 211 adjacent to the locking pin 420 limits the movement of the locking pin 420. Thus, the locking pin 420 cannot move into the first limiting groove 211 and the second limiting groove 411.

In an optional embodiment, in the first state, the orthographic projection of the first notch of the first limiting groove 211 toward the second limiting groove 411 on the projection plane is within the orthographic projection of the second notch of the second limiting groove 411 toward the first limiting groove 211 on the projection plane, which may be the fact that the orthographic projection of the first notch of the first limiting groove 211 toward the second limiting groove 411 on the projection plane coincides with the orthographic projection of the second notch of the second limiting groove 411 toward the first limiting groove 211 on the projection plane.

In another optional embodiment, in the first state, the orthographic projection of the first notch of the first limiting groove 211 toward the second limiting groove 411 on the projection plane is within the orthographic projection of the second notch of the second limiting groove 411 toward the first limiting groove 211 on the projection plane, which may be the fact that the orthographic projection of the first notch of the first limiting groove 211 toward the second limiting groove 411 on the projection plane is smaller than and located in the orthographic projection of the second notch of the second limiting groove 411 toward the first limiting groove 211 on the projection plane, which are not limited herein.

In an optional embodiment, the locking pin 420 may be a uniform cylinder extending in the axial direction (i.e., a cylinder that remains the same in cross-section) or may be partially uniform cylinder in the axial direction. At least portion of both the first limiting groove 211 and the second limiting groove 411 may be uniform groove, and the orthographic projection of the uniform portion of the first limiting groove 211 on the projection plane coincides with the orthographic projection of the first notch on the projection plane. Similarly, the orthographic projection of the uniform portion of the second limiting groove 411 on the projection plane coincides with the orthographic projection of the second notch on the projection plane. Thus, when entering the first state, the portion of the locking pin 420 can move from the second limiting groove 411 to the first limiting groove 211.

In another optional embodiment, the locking pin 420 may be a taper in the axial direction. Optionally, the end of the locking pin 420 adjacent to the first limiting groove 211 is smaller than the end away from the first limiting groove 211. Correspondingly, at least portion of both the first limiting groove 211 and the second limiting groove 411 may be a tapered groove.

Optionally, the orthographic projection of the tapered groove portion of the first limiting groove 211 on the projection plane is smaller than the orthographic projection of the first notch on the projection plane, and may gradually decrease in the direction away from the first notch. The orthographic projection of the tapered groove portion of the second limiting groove 411 on the projection plane is larger than the orthographic projection of the first notch on the projection plane, and optionally may gradually increase in the direction away from the second notch.

Optionally, the orthographic projection refers to a projection perpendicular to the projection plane, for example, the orthographic projection of the first notch of the first limiting groove 211 on the projection plane is the projection of the first notch of the first limiting groove 211 on the projection plane in the axis direction of the first limiting groove 211. The orthographic projection of the first notch of the second limiting groove 411 on the projection plane is the projection of the first notch of the second limiting groove 411 on the projection plane along the axis of the second limiting groove 411.

Referring to FIGs. 4, 6, 9, and 10, according to some embodiments of the present disclosure, optionally, a cross section of the first limiting groove 211 perpendicular to the axial direction of the first limiting groove 211 and a cross section of the second limiting groove 411 perpendicular to the axial direction of the second limiting groove 411 are both polygonal structures.

In an optional embodiment, the cross section of the first limiting groove 211 perpendicular to the axial direction of the first limiting groove 211 and the cross section of the second limiting groove 411 perpendicular to the axial direction of the second limiting groove 411 are both rectangular structures. That is, when the first limiting groove 211 is rotated by 0° or 180° relative to the second limiting groove 411, the orthographic projection of the first notch of the first limiting groove 211 toward the second limiting groove 411 on the projection plane is within the orthographic projection of the second notch of the second limiting groove 411 toward the first limiting groove 211 on the projection plane. When the first limiting groove 211 is rotated by another angle relative to the second limiting groove 411, the orthographic projection of the first notch of the first limiting groove 211 toward the second limiting groove 411 on the projection plane is partially misaligned with the orthographic projection of the second notch of the second limiting groove 411 toward the first limiting groove 211 on the projection plane.

The second limiting groove 411 is inclined relative to a lengthwise direction or widthwise direction of the locking member 410. That is, a sidewall of the second limiting groove 411 forms an angle with the lengthwise direction or widthwise direction of the locking member 410. By setting the inclination angle of the second limiting groove 411 relative to the lengthwise direction or the widthwise direction of the locking member 410, the handrail 200 can be locked at a preset angle relative to the body 100. It should be understood that, in the present disclosure, the inclination angle of the second limiting groove 411 relative to the lengthwise direction or the widthwise direction of the locking member 410 is not limited, and can be set according to a preset angle at which the handrail 200 is locked relative to the body 100.

In another optional embodiment, the cross section of the first limiting groove 211 perpendicular to the axial direction of the first limiting groove 211 and the cross section of the second limiting groove 411 perpendicular to the axial direction of the second limiting groove 411 can be a quadrilateral structure or a pentagonal structure, which is not limited in the present disclosure.

Referring to FIGs. 1, 4, 6 and 8, according to some embodiments of the present disclosure, optionally, the locking mechanism 400 further includes a locking-driving assembly 430. When the handrail 200 rotates to a preset angle relative to the body 100, the locking-driving assembly 430 is configured to drive the locking pin 420 to move into the first limiting groove 211 and the second limiting groove 411 in the axial direction of the second limiting groove 411.

Optionally, the locking-driving assembly 430 includes a locking-resetting elastic member 431 and a locking end cap 432. The locking end cap 432 is provided at an end of the locking member 410 away from the assembly member 210. The locking-resetting elastic member 431 is located between the locking pin 420 and the locking end cap 432. Optionally, the locking-resetting elastic member 431 is a spring.

When the handrail 200 is in the second state, the locking-resetting elastic member 431 is in a compressed state. When the handrail 200 rotates to a preset angle relative to the body 100, subjected to the elastic force of the locking-resetting elastic member 431, the locking-resetting elastic member 431 can drive the locking pin 420 to move into the first limiting groove 211 and the second limiting groove 411 in the axial direction of the second limiting groove 411.

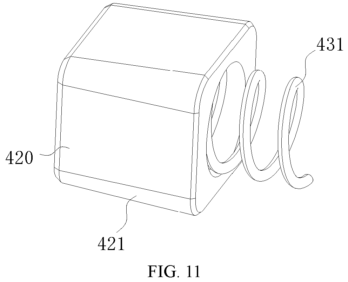

Referring to FIGs. 4, 9, 10, and 11, the first limiting groove 211 and the second limiting groove 411 are both provided with a first tapered surface 2111. An outer circumference of the locking pin 420 is provided with a second tapered surface 421. The second tapered surface 421 is engaged with the first tapered surface 2111 to facilitate movement of the locking pin 420 into the first limiting groove 211 and the second limiting groove 411.

Optionally, the second taper surface 421 gradually decreases in size from one end adjacent to the locking-resetting elastic member 431 to the other end away from the locking-resetting elastic member 431, which is more favorable for moving into the first limiting groove 211 and the second limiting groove 411, and can serve as a guide.

Referring to FIGs. 4, 6 and 8, according to some embodiments of the present disclosure, optionally, the assembly member 210 is provided with a sliding hole 212 defined at a bottom of the first limiting groove 211. The connecting pin 300 includes a sliding portion 310 slidably connected to the sliding hole 212. The sliding portion 310 is configured to be connected to the locking pin 420. Specifically, when the unlocking mechanism 500 drives the connecting pin 300 to move in the axial direction of the first limiting groove 211, the sliding portion 310 of the connecting pin 300 can be connected to the locking pin 420, so as to drive the locking pin 420 to be disengaged from the first limiting groove 211.

In an optional embodiment, the connecting pin 300 further includes an abutting portion 320 provided at an end thereof adjacent to the locking pin 420. The abutting portion 320 is configured to be connected to the locking pin 420 and is capable of abutting against the bottom of the first limiting groove 211. In this embodiment, a diameter of the abutting portion 320 is greater than a diameter of each of the sliding hole 212 and the sliding portion 310.

When the unlocking mechanism 500 drives the connecting pin 300 to move in the axial direction of the first limiting groove 211, the abutting portion 320 can abut against the locking pin 420 to drive the locking pin 420 to move away from the first limiting groove 211. By providing the abutting portion 320 to abut against the bottom portion of the first limiting groove 211, the abutting portion 320 cannot be disengaged from the first limiting groove 211, thereby limiting the connecting pin 300.

In another optional embodiment, an end of the sliding portion 310 away from the locking pin 420 can abut against the bottom of the first limiting groove 211, so that the sliding portion 310 cannot be disengaged from the first limiting groove 211, thereby limiting the connecting pin 300.

In yet another optional embodiment, the sliding portion 310 and the locking pin 420 are integrally formed. Specifically, the diameter of the sliding portion 310 is less than the length and width of the locking pin 420.

Referring to FIGs. 4, 6, and 8, according to some embodiments of the present disclosure, optionally, the connecting pin 300 further includes a connecting portion 330 connected to the unlocking mechanism 500. Specifically, the unlocking mechanism 500 is an unlocking button, and the unlocking mechanism 500 is fixedly connected to a connecting portion 330 of the connecting pin 300.

Referring to FIGs. 4, 6, and 8, according to some embodiments of the present disclosure, optionally, the robot 10 further includes a damping hovering assembly 600 mounted between the assembly member 210 and the connecting pin 300. The damping hovering assembly 600 is configured to apply a damping force to a rotating of the assembly member 210. By providing the damping hovering assembly 600, a resistance force can be applied to the rotating of the assembly member 210, thereby enabling the handrail 200 to be hovered at a specific angle.

The robot 10 further includes an unlocking elastic member 700, and both opposite ends of the unlocking elastic member 700 abut against the sliding portion 310 and the damping hovering assembly 600, respectively. Specifically, the unlocking elastic member 700 is a spring. When the unlocking mechanism 500 is pressed, the unlocking elastic member 700 is in a compressed state. When the unlocking mechanism 500 is released, the unlocking elastic member 700 can provide an elastic force to drive the connecting pin 300 and the unlocking mechanism 500 to reset.

Referring to FIGs. 4, 6, and 8, according to some embodiments of the present disclosure, optionally, the assembly member 210 is in servo cooperation with the connecting pin 300. The damping hovering assembly 600 includes a damper 610 and a damping mounting plate 620. The damper 610 is sleeved on the connecting pin 300 to exert resistance force to a rotation of the connecting pin 300, thereby applying resistance force to the rotating of the assembly member 210. The damping mounting plate 620 includes a first mounting portion and a second mounting portion. The first mounting portion is connected to the damper 610 and is sleeved on the connecting pin 300, and the second mounting portion is fixedly connected to the locking member 410.

Referring to FIGs. 1, 2, and 3, according to some embodiments of the present disclosure, optionally, the robot 10 further includes a display screen 800 connected to the handrail 200. When the handrail 200 rotates relative to the body 100, the display screen 800 can rotate with the rotating of the handrail 200.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present disclosure.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the patent protection of the present disclosure shall be defined by the appended claims.

## Claims

1. A robot (10), comprising:
a body (100);
a handrail (200), an end of the handrail (200) being provided with an assembly member (210), wherein the assembly member (210) is provided with a first limiting groove (211) and a connecting pin (300) extending through the first limiting groove (211) and being movable in an axial direction of the first limiting groove (211);
a locking mechanism (400) comprising a locking member (410) and a locking pin (420) that are fixedly connected to the body (100), wherein the locking member (410) is hinged to the assembly member (210), such that the handrail (200) is capable of rotating relative to the body (100), the locking member (410) is provided with a second limiting groove (411) configured to receive the locking pin (420), when the handrail (200) rotates to a preset angle relative to the body (100), the locking pin (420) is capable of moving in an axial direction of the second limiting groove (411) and moving into the first limiting groove (211) and the second limiting groove (411), so as to lock the handrail (200) in a first state;
an unlocking mechanism (500) located at one end of the connecting pin (300), wherein the locking pin (420) is located at another end of the connecting pin (300), the unlocking mechanism (500) is configured to drive the connecting pin (300) to move in the axial direction of the first limiting groove (211), so as to drive the locking pin (420) to be disengaged from the first limiting groove (211), thereby enabling the handrail (200) to be switched from the first state to a second state.

2. The robot (10) according to claim 1, wherein in the first state, an orthographic projection of a first notch of the first limiting groove (211) toward the second limiting groove (411) on a projection plane is within an orthographic projection of a second notch of the second limiting groove (411) toward the first limiting groove (211) on the projection plane;
wherein the projection plane is a horizontal plane perpendicular to the axial direction of the first limiting groove (211).

3. The robot (10) according to claim 1, wherein in the second state, an orthographic projection of a first notch of the first limiting groove (211) toward the second limiting groove (411) on a projection plane is partially misaligned with an orthographic projection of a second notch of the second limiting groove (411) toward the first limiting groove (211) on the projection plane; wherein the projection plane is a horizontal plane perpendicular to the axial direction of the first limiting groove (211).

4. The robot (10) according to claim 1, wherein the connecting pin (300) is provided separately from the locking pin (420).

5. The robot (10) according to claim 1, wherein the connecting pin (300) is fixedly connected to the locking pin (420).

6. The robot (10) according to claim 1, wherein a cross section of the first limiting groove (211) perpendicular to the axial direction of the first limiting groove (211) and a cross section of the second limiting groove (411) perpendicular to the axial direction of the second limiting groove (411) are both polygonal structures.

7. The robot (10) according to claim 1, wherein the locking mechanism (400) further comprises a locking-driving assembly (430), when the handrail (200) rotates to the preset angle relative to the body (100), the locking-driving assembly (430) is configured to drive the locking pin (420) to move into the first limiting groove (211) and the second limiting groove (411) in the axial direction of the second limiting groove (411).

8. The robot (10) according to claim 7, wherein the locking-driving assembly (430) comprises a locking-resetting elastic member (431) and a locking end cap (432), the locking end cap (432) is provided at an end of the locking member (410) away from the assembly member (210), and the locking-resetting elastic member (431) is located between the locking pin (420) and the locking end cap (432).

9. The robot (10) according to claim 8, wherein both the first limiting groove (211) and the second limiting groove (411) are provided with a first tapered surface (2111), an outer circumference of the locking pin (420) is provided with a second tapered surface (421), the second tapered surface (421) is engaged with the first tapered surface (2111) to facilitate movement of the locking pin (420) into the first limiting groove (211) and the second limiting groove (411).

10. The robot (10) according to claim 9, wherein the second taper surface (421) gradually decreases in size from one end adjacent to the locking-resetting elastic member (431) to another end away from the locking-resetting elastic member (431).

11. The robot (10) according to claim 1, further comprising a damping hovering assembly (600) mounted between the assembly member (210) and the connecting pin (300), wherein the damping hovering assembly (600) is configured to apply a damping force to a rotating of the assembly member (210).

12. The robot (10) according to claim 11, wherein the assembly member (210) is provided with a sliding hole (212) defined at a bottom of the first limiting groove (211), the connecting pin (300) comprises a sliding portion (310) slidably connected to the sliding hole (212), and the sliding portion (310) is configured to be connected to the locking pin (420).

13. The robot (10) according to claim 12, wherein the connecting pin (300) further comprises an abutting portion (320) provided at an end thereof adjacent to the locking pin (420), the abutting portion (320) is configured to be connected to the locking pin (420) and is capable of abutting against the bottom of the first limiting groove (211).

14. The robot (10) according to claim 12, wherein an end of the sliding portion (310) away from the locking pin (420) is capable of abutting against the bottom of the first limiting groove (211).

15. The robot (10) according to claim 12, wherein the sliding portion (310) and the locking pin (420) are integrally formed.

16. The robot (10) according to claim 12, wherein the connecting pin (300) further comprises a connecting portion (330) connected to the unlocking mechanism (500), the robot (10) further comprises an unlocking elastic member (700), and both opposite ends of the unlocking elastic member (700) abut against the sliding portion (310) and the damping hovering assembly (600), respectively.

17. The robot (10) according to claim 11, wherein the assembly member (210) is in servo cooperation with the connecting pin (300), the damping hovering assembly (600) comprises a damper (610) sleeved on the connecting pin (300) to exert resistance force to a rotation of the connecting pin (300), thereby applying resistance force to the rotating of the assembly member (210).

18. The robot (10) according to claim 17, wherein the damping hovering assembly (600) further comprises a damping mounting plate (620) comprising a first mounting portion and a second mounting portion, the first mounting portion is connected to the damper (610) and is sleeved on the connecting pin (300), and the second mounting portion is fixedly connected to the locking member (410).

19. The robot (10) according to claim 1, further comprising a display screen (800) connected to the handrail (200).

20. The robot (10) according to claim 1, wherein the locking member (410) is hinged to the assembly member (210) by a hinge assembly, the hinge assembly comprises an annular engaging block provided on the assembly member (210) and an annular engaging groove provided on the locking member (410) and mated with the annular engaging block.
